# EUROPEAN PATENT SPECIFICATION

(11) **EP 3 983 862 B1**
(45) Date of publication and mention of the grant of the patent: **03.04.2024**
(21) Application number: 20739869.4
(22) Date of filing: 23.06.2020
(51) Int. Cl.: G05D 1/00, B60W 60/00

(54) **METHOD, DEVICE AND SYSTEM FOR CONTROLLING AUTONOMOUS VEHICLES**
VERFAHREN, VORRICHTUNG UND SYSTEM ZUR STEUERUNG AUTONOMER FAHRZEUGE
PROCÉDÉ, DISPOSITIF ET SYSTÈME DE COMMANDE DE VÉHICULES AUTONOMES

(30) Priority: 06.08.2019 US 201962883362 P
(43) Date of publication of application: 20.04.2022
(73) Proprietor: Siemens Electronic Design Automation GmbH, 80634 München (DE)
(72) Inventor: SALLEM, Nizar, San Jose, CA 95113 (US); SZABO, Richard, 81669 München (DE)
(74) Representative: Siemens Patent Attorneys
(86) International application number: PCT/EP2020/067489
(87) International publication number: WO 2021/023429

(56) References cited:
- WO-A1-2018/072394
- WO-A1-2018/221159

## Description

### Cross Reference to Related Application

This application claims priority to U.S. Provisional Patent Application 62/883,362 filed on Aug. 06, 2019, entitled "Method, Device and System for managing autonomous vehicles".

### Technical background

The present invention relates to autonomous vehicles capable of land, water and aerial movement. Particularly, the present invention relates to controlling the autonomous vehicles.

### Background

Autonomous vehicles include multiple sensing and actuating units which are used for navigation. The autonomous vehicles also include controllers that interface with the sensing and actuating units for control and supervision.

It may be necessary for the controllers to recognize and react to an increased number of complex scenarios. The controller may classify information associated with the autonomous vehicles into safety critical information and knowledge base. The classification recognizes that the safety critical information and the knowledge base have different processing requirements. For example, processing of safety critical information needs to be carried as fast as possible. This may enable avoidance of a critical situation. Knowledge base on the other hand, may require deep processing of sensor data to enhance accuracy. With higher accuracy the controller may be able to take better decisions.

From WO 2018/072394 A1 an environmental model is already known that is using a safety model to predict the behavior of a vehicle.

WO 2018/221159 discloses a vehicle that is controlled on basis of analysis of safety critical components.

One approach to address the different requirements is by reaching a tradeoff between processing safety critical information and accuracy. However, the complexity of the environment may impact the tradeoff. For example, empty environment is less complex than an obstructed environment. The change from a less complex environment to a complex environment may occur very quickly. Therefore, by having the tradeoff, the autonomous vehicles may operate at sub-optimal levels in real-time.

### SUMMARY

The present invention discloses a method, device and system for controlling the autonomous vehicle by decoupling safety critical information. Further, the invention discloses a link between knowledge base and the safety critical information to enable processing of safety critical information while maintaining accuracy.

A controller for controlling at least one autonomous vehicle includes a firmware module configured to control the autonomous vehicle. The firmware module includes an event module configured to process safety critical components in an environmental model of the autonomous vehicle to generate emergency control signals to control the autonomous vehicle. As used herein, the environmental model acts as the knowledge base and is a digital representation of the autonomous vehicle and an environment associated with the autonomous vehicle. As used herein the safety critical components include data from the digital representation critical to the safety of the environment and the autonomous vehicle. The firmware module also includes a transaction module configured to update the environmental model by transactional processing of sensor data from sensing units of the autonomous vehicle, whereby the safety critical components and/or non-safety critical components of the environmental model are updated. As used herein the non-safety critical components include data from the environmental model not critical to the safety of the environment and/or autonomous vehicle.

The event module may be configured to process the safety critical components and generate the emergency control signals irrespective of the update to the transaction module.

The transaction module is configured to define the updates as transactions performed on the environmental model using at least one of the sensor data and the predicted updates, wherein the transactions include insertion, deletion, modification of the object parameters in the occupancy map, and wherein the transactions are executed as atomic, recoverable operations.

A second aspect of the present invention is a system for controlling at least one autonomous vehicle. The system comprising sensing units configured to generate sensor data indicating environment of the autonomous vehicle. As used herein the sensor data indicates position, location of the autonomous vehicle and objects in the environment. The system also includes a controller as described herein above. The controller is communicatively coupled to the sensing units and configured to generate control signals that control operation of the autonomous vehicle. The system may include actuating units configured to control operation of the autonomous vehicle based on the control signals.

A third aspect of the present invention is a method of controlling at least one autonomous vehicle. The method includes identifying safety critical components in an environ-mental model of the autonomous vehicle. The environmental model is a digital representation of the autonomous vehicle and an environment associated with the autonomous vehicle. The safety critical components include data from the digital representation critical to the safety of the environment and the autonomous vehicle. The method includes generating emergency control signals to control operation of the autonomous vehicle based on the safety critical components. The method further includes updating the environmental model by transactional processing of sensor data from sensing units in the autonomous vehicle, whereby at least one of the safety critical components and non-safety critical components of the environmental model are updated, and wherein the non-safety critical components include data from the environmental model not critical to the safety of the environment and autonomous vehicle.

The method may include defining updates to the environmental model as transactions to be performed on the environmental model, wherein the updates are based on one of the sensor data and the predicted updates. Further, the method includes executing the transactions as atomic, recoverable operations, wherein the transactions include insertion, deletion, modification of the object parameters in the occupancy map.

The above-mentioned and other features of the invention will now be addressed with reference to the accompanying drawings of the present invention.

The present invention is further described hereinafter with reference to illustrated embodiments shown in the accompanying drawings, in which:
FIG 1 illustrates a block diagram of classification of sensor data, according to an embodiment of the present invention;
FIG 2 illustrates a block diagram of a controller for controlling an autonomous car, according to an embodiment of the present invention;
FIG 3 illustrates a block diagram of a system for controlling an unmanned aerial vehicle, according to an embodiment of the present invention;
FIG 4 illustrates a block diagram of solution stack used by the controller in FIG 2 and the system in FIG 3, according to an embodiment of the present invention; and
FIG 5 illustrates method of controlling one or more autonomous vehicles, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

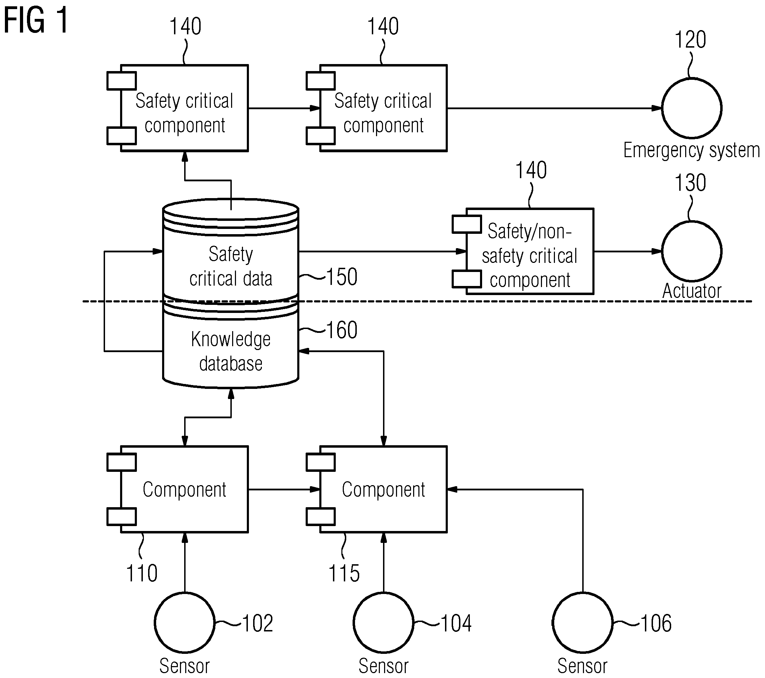

FIG 1 illustrates a block diagram of classification of sensor data from sensing units 102, 104 and 106, according to an embodiment of the present invention.

The sensing units 102, 104 and 106 are sensors that include but are not restricted to cameras, Light Detection and Ranging (LiDAR), Radar, Global Positioning System (GPS) sensors, Inertial Measurement Unit (IMUs) etc. Accordingly, the sensing units 102, 104 and 106 refer to any system/device capable of providing information on an autonomous vehicle and associated environment.

In FIG 1, the sensing unit 102 is communicatively coupled to component 110. The sensing units 104 and 106 are communicatively coupled to component 115. In an embodiment, component 110 is a landing gear and component 115 is a hood of the Unmanned Air Vehicle (i.e. autonomous vehicle). In the embodiment of the Unmanned Air Vehicle (UAV), the sensing unit 102 is configured to provide information regarding the environment below the UAV. Similarly, the environment above the UAV is sensed by the sensing units 104 and 106.

In another embodiment, the component 110 is a front door and component 115 is a front bumper of an autonomous car. The sensing units 102 is configured to provide information to enable determination of side impact and lane departure. The sensing units 104 and 106 provide information regarding path clearance.

The sensor data from sensing units 102, 104 and 106 accordingly provide information regarding the environment. Individually, the sensor data from sensing units 102, 104 and 106 may not provide a comprehensive understanding of the environment. Accordingly, the sensor data may be fused and stored in a knowledge database 160.

The knowledge database 160 includes is a database that stores an environmental model of the autonomous vehicle and the environment. The environmental model is a digital representation of the autonomous vehicle and the environment in real time.

The environmental model includes an object list of objects in the autonomous vehicle and the environment. As used herein, the objects include at least one of living objects, non-living objects, animate objects and inanimate objects that may be in the autonomous vehicle or in the environment. For example, the objects include passenger in the autonomous vehicle, pedestrians, other vehicles, buildings, etc.

Further, the environmental model includes an occupancy map of the objects and associated object parameters. As used herein, the object parameters define status of the objects at a time instance and a relationship of the objects with respect to the autonomous vehicle. For example, spatial relationship between the objects and the autonomous vehicle is stored in the occupancy map.

Safety critical components 140 in the environmental model is extracted for processing. The safety critical components 140 are identified based on safety critical data 150 in the environmental model. The safety critical data 150 indicates what object parameters are critical to the safety of the objects and the autonomous vehicle. The safety critical components 140 require immediate processing and therefore are processed without delay.

The processing of the safety critical components 140 may lead to generation of control signals to the actuator units 130 and/or emergency control signals to emergency systems 120. As used herein, the emergency systems 120 include the actuator units that are responsible for the safety of the autonomous vehicle and the objects. For example, the emergency systems 120 include braking unit of the autonomous vehicle or air-bag unit.

The actuator units 130 include any component of the autonomous vehicle that impacts its behaviour. For example, actuating units 130 include speed controllers, engine, propellers, landing gear and chassis controllers, etc. The actuator units 130 may also be used to control the autonomous vehicle for non-critical scenarios.

The environmental model may be updated after the safety critical components 140 are processed. In an embodiment, the environmental model is updated by defining each update as a transaction. The transactions include insertion, deletion, modification of the object parameters in the occupancy map.

The transactions are executed as atomic, recoverable operation. Accordingly, the transaction-based updation ensures that the updates to the environmental model are completed and the environmental model can be trusted. Accordingly, at any instance, guaranteed access to the latest environmental model is assured.

FIG 1 also illustrates the process of controlling the autonomous vehicle based on information collected from the environment using different sensing units 102, 104 and 106. The sensor data is gathered at a central point or the knowledge database 160 to construct a first representation of the environment. The first representation is referred hereinabove as the environmental model. Part of the representation critical to the safety of the autonomous vehicle is decoupled from the rest of the representation. The environmental model is accessible to both safety critical components 140 and non-safety critical components. The safety critical components 140 consider this information as complete at the time of access and acts based on it. The non-safety critical components can further distill the environmental model by:
1. Inserting information from the sensing units that are not directly related to the safety of the autonomous vehicle and the environment.
2. Aggregating information over time
3. Interpreting past knowledge in the light of current observations

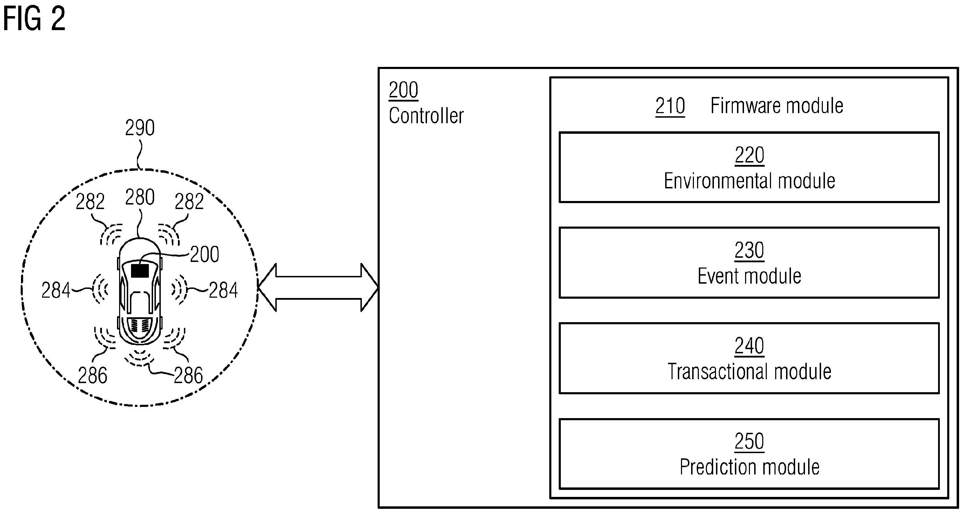

The above process is performed using a controller for controlling one or more autonomous vehicles. FIG 2 illustrates a block diagram of a controller 200 for controlling an autonomous car 280, according to an embodiment of the present invention.

The autonomous car 280 is provided with multiple sensing units 282, 284 and 286. The sensing units 282, 284 and 286 are configured to gather information regarding the autonomous car 280 and an environment 290 associated with the car 280. The autonomous car 280 includes actuating units (not shown in FIG 2). The sensing units 282, 284 and 286 and the actuating units are communicatively coupled to the controller 200.

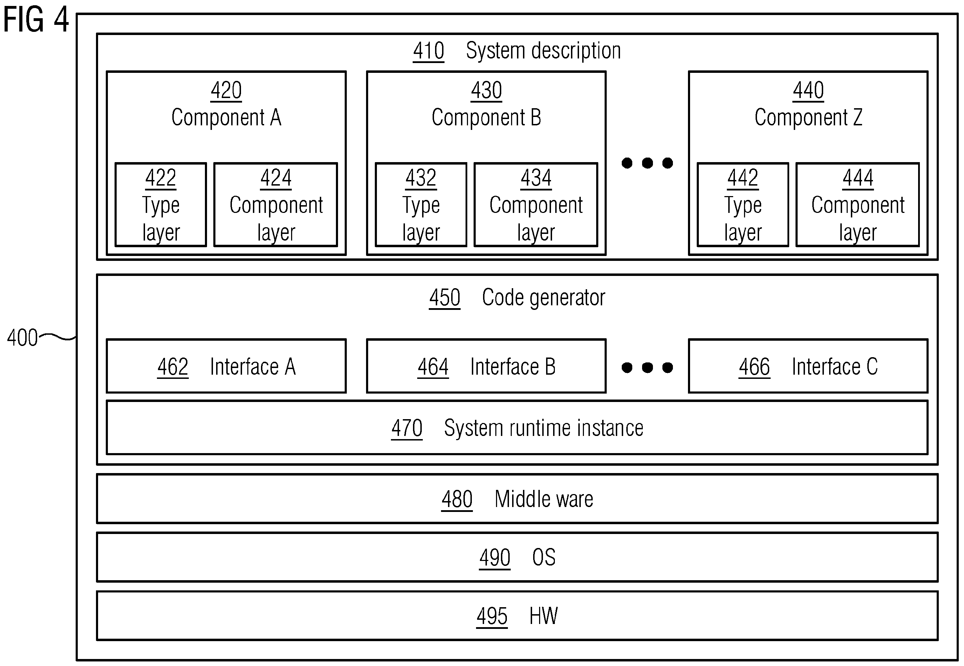

The controller 200 includes a firmware module 210. As used herein the firmware module 210 refers to hardware and memory that are capable of executing and storing software instructions. As used herein, "memory" refers to all computer readable media, for example, non-volatile media, volatile media, and transmission media except for a transitory, propagating signal. The memory stores the computer program instructions defined by modules for example, environment module 220, event module 230, transactional module 240 and prediction module 250. The architecture of the firmware 210 is further described in FIG 4.

On execution of the modules in the firmware module 210, the controller 200 is capable of controlling the autonomous car 280. Each of the modules are discussed hereinafter.

The environment module 220 is configured to generate an environmental model from the sensor data generated by the sensing units 282, 284 and 286. The environmental model is a digital representation that is generated from the sensor data. The environment module 220 is configured to construct the digital representation using sensor fusion algorithms. In an embodiment, the sensor fusion algorithms are executed by which the sensor data are analyzed to generate an object list in the car 280 and the environment 290. Accordingly, the environmental model includes the object list with the objects such as living objects, non-living objects, animate objects and inanimate objects. Further, the environmental model includes an occupancy map of the objects and associated object parameters. The object parameters define status of the objects at a time instance and a relationship of the objects with respect to the autonomous car 280. For example, the relationship of the objects may be defined spatially.

The environmental model enables the controller to interpret the environment 290. Further, current and anticipated state of the car 280 is used to perform trajectory planning for the car 280. Further, the environmental model is constantly updated to enable route planning for the car 280. The updation of the environmental model may be performed as in-divisible updates so that the integrity of the environmental model is maintained.

The event module 230 is configured to process safety critical components in the environmental model of the autonomous car 280 and the environment 290. The event module 220 is further configured to generate emergency control signals to control the autonomous car 280. The safety critical components include data from the environmental model that are critical to the safety of the environment 290 and the autonomous car 280. For example, an obstructing object in the environment 290 may be critical to the safety of the car 280, objects within the car 280 and the environment 290.

The environmental model is analyzed based on the information of an obstructing object. The classification of the object may not be considered while generating the emergency control signals. For example, the environmental model may misclassify an object as a tree instead of a pedestrian. The environmental model may be updated to correctly classify the object as a pedestrian. Nevertheless, the decision to avoid the object ensures protection of the car 280, objects in the car 280 and the object/pedestrian. Accordingly, the event module 230 is configured to process the safety critical components irrespective of the update to the environmental model to generate the emergency control signals. As used herein "emergency control signals" are control signals sent to actuator units of the car 280 to control the behavior of the car 280 on priority. The control signals may also be sent to emergency systems such as air-bag unit in the car 280.

The updation of the environmental model is performed by the transaction module 240. The configured to update the environmental model by transactional processing of the sensor data. As used herein "transactional processing" refers to a technique of dividing the sensor data into individual, indivisible operations, called transactions. The transactions are complete or fail as a whole. Accordingly, the transaction has completed, or it has been "rolled back" after failure. Transaction processing is advantageous as the integrity of the environmental model is maintained in a known, consistent state.

The transaction module 240 is configured to update at least one of the safety critical components and non-safety critical components of the environmental model. The non-safety critical components include data from the environmental model not critical to the safety of the environment and autonomous vehicle. In an embodiment, the transaction module 240 is configured to define the updates as transactions performed on the environmental model using either the sensor data or predicted updates to the sensor data. For example, if the object begins to move the predicted updates of the direction of movement may be updated in the environmental model. The transactions include insertion, deletion, modification of the object parameters in the occupancy map, and wherein the transactions are executed as atomic, recoverable operations. Further, the transaction module 240 is configured such that two transactions cannot modify the environmental model at the same time.

The prediction module 250 configured to predict updates to the environmental model based on historical sensor data. For example, the sensor data from a previous day for the same time is used as reference to predict possible pedestrian traffic. The predicted updates are used by the transaction module 240 to define the transactions that update the environmental model. The prediction module 250 is used to interpret the historical sensor data in view of the sensor data received in real-time. Therefore, the environmental model when updated is enables the controller 200 to take informed decisions.

The controller 200 is advantageous as it satisfies the safety requirement by providing safety relevant information with the lowest possible latency. Further, the controller 200 harnesses as much knowledge as potentially available in the environment 290 without hindering the performance or sacrificing safety. The combination of the event module 230 and the transactional module 240 It guarantees that the sensor data received from the sensing units 282, 284 and 286 will always be accessible.

The event module 230 ensures that the controller 200 is: Reactive: as soon an event (i.e. a safety critical component) is identified, the appropriate action can be taken by the controller 200 with least possible delay.

Flexible: the safety critical components can be organized in a hierarchy to give higher importance certain object parameters in the environmental model. Further, actions can be triggered can be configured based on the safety critical components that are identified.

Transactional module 240 also enables the controller 200 to respond to the updates with minimum response time. Further, the controller 200 is available to process events while updating the environmental model. In addition, the data integrity of the environmental is always protected. Further, the controller 200 can be modular and extended at incremental cost as the sensor data becomes larger or more components are to use the controller.

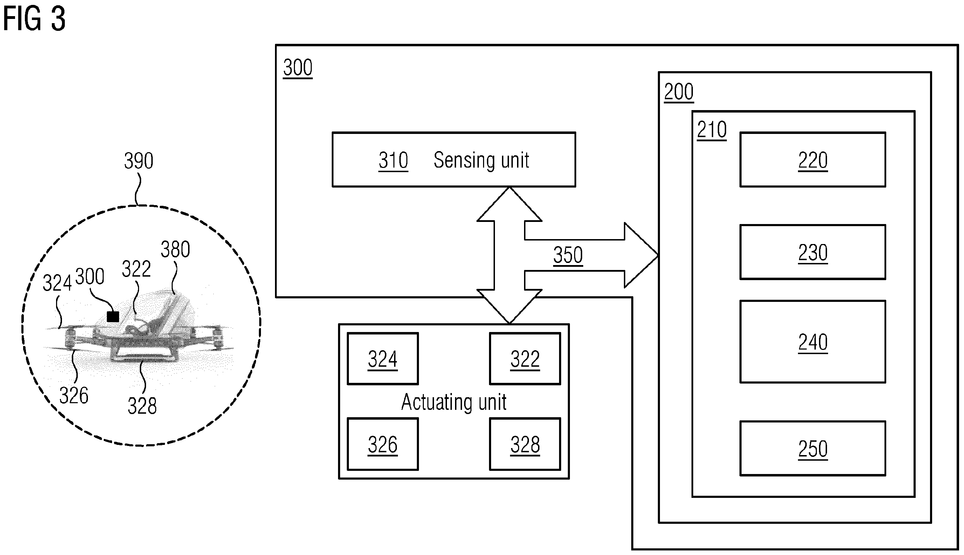

In certain embodiments, the controller 200 may include a central sensing unit where the sensor data is fused in real time at all levels. Such a control system is disclosed in FIG 3.

FIG 3 illustrates a block diagram of a system 300 for controlling an unmanned aerial vehicle 380, according to an embodiment of the present invention.

The unmanned aerial vehicle 380 is an autonomous vehicle and includes multiple actuator units. In FIG 3, example actuator units are indicated, for example, a steering unit 322, a propeller 324, a braking unit 326 and a landing unit 328. Further, connecting the unmanned aerial vehicle 380 and the system 300 is a programmable network interface 350.

The network interface 350 is configured to provide communication among the sensing units, the actuating units and/or the controller 200 using one or more of wired and wireless communication standards. For example, wired communication standards include Peripheral Component Interconnect Express (PCI-e) and Gigabit Ethernet and Flat Panel Display Link (FPD-Link). Wireless communication standard may include Bluetooth, ZigBee, Ultra Wide Band (UWB) and Wireless Local Area Network (WLAN). Examples of the network interconnect 350 include Controller Area Network (CAN), Local Interconnect Network (LIN) and Automotive Ethernet.

The system 300 includes a sensing unit 310, controller 200 and a programmable network interface 350. The sensing unit 310 includes a combination of data gathering devices i.e. sensors and/or processors. In the sensing unit 310, sensor data having different types/formats (2D, 3D, ADC, etc.) are fused. Further, in combination with the environment module 220, the sensor data at varying frame rates are combined into one time and spatially synced view referred to as the environmental model. The environmental model provides a digital representation of environment 390 and the unmanned aerial vehicle 280.

When the unmanned aerial vehicle 380 is in operation, the controller 200 is used to process events and update the environmental model. the operation of the controller 200 is similar to the description provided in FIG 2. In an embodiment, the controller 200 includes Field Programmable Gate Array (FPGA) the environmental model generation and sensor data fusion. Further, the controller 200 may include a System on Chip (SOC) for executing the event module 230, the transaction module 240 and the prediction module 250. In an embodiment, the controller 200 includes a Micro Controller Unit (MCU) for operating the network interface 350.

The present invention further includes a solution stack 400 to enable event processing and transaction-based updation of the environmental model. FIG 4 illustrates a block diagram of the solution stack 400 used by the controller 200 and the system 300, according to an embodiment of the present invention.

The stack 400 includes a hardware layer 495. The hardware layer 495 may include one or more central processing units and/or FPGAs. Above the hardware layer 495 is an operating system layer 490. In an embodiment, the logic executed by the modules 220, 230, 240 and 250 of the present invention is independent of the hardware layer 495 and the operating system layer 490.

Above the operating system layer 490 is a middle-ware layer 480. The middle-ware layer 480 may include run-time dynamic libraries and/or transport libraries. Further, the middle-ware layer 480 may include abstraction libraries for operating system abstraction.

The operating system layer 480 is preceded by a code generator layer 450. The code generator layer 450 include a system runtime instance layer 470 and component interfaces 462, 464 and 468. The code generator layer 450 synthetizes code from domain specific language. The code generator layer 450 generates package with the runtime instance and interface. The instances are made from components defined in component layer.

Above the code generator layer 450 is a system description layer 410. The system description layer 410 is defined for each component 420, 430 and 440. Each component includes a type layer 422, 432, 442, respectively. Further, each component includes the component layer 424, 434, 444, respectively.

The system description layer 410 enables updates to the environmental model to be described. The description is in terms of instances of components connected based on predetermined relationships. Each component may correspond to a semantic entity with a task in the system. A component are the parts of the system that create and process the updates to the environmental model. The updates may be described using the type layer 422, 432, 442.

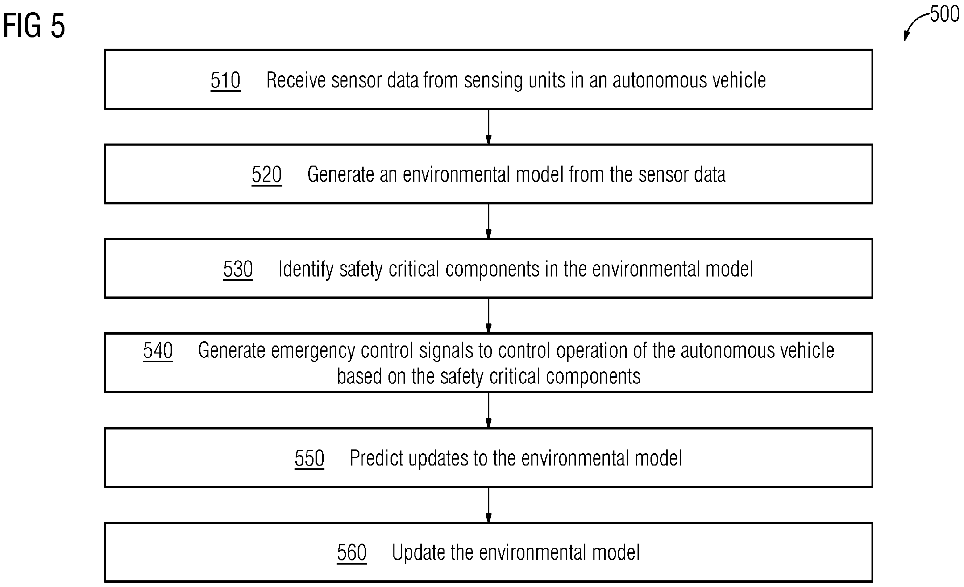

FIG 5 illustrates method 500 of controlling one or more autonomous vehicles, according to an embodiment of the present invention. The method begins at step 510 by receiving sensor data from sensing units in an autonomous vehicle. The sensor data may include raw, unfiltered data from radar, light detection and ranging (LIDAR), vision and other sensors in real time.

At step 520, an environmental model is generated from the sensor data. The environmental model is a digital representation of the autonomous vehicle and an environment associated with the autonomous vehicle. As used herein the environmental model may also include a first digital representation that is generated based on the sensor data using sensor fusion techniques. First digital representation indicates the potential for the environmental model to dynamically evolve. In an embodiment, a controller will execute sensor fusion algorithms on the raw sensor data and generate an object list of the vehicle and an environment associated with the vehicle. The environment includes the vehicle's surroundings.

The environmental model may include the object list of objects in the autonomous vehicle and the environment an occupancy map. The objects include at least one of living objects, non-living objects, animate objects and inanimate objects. A relationship of the objects with respect to the vehicle is mapped in the occupancy map. Accordingly step 520 also includes generating the occupancy map including a map of the objects and associated object parameters. The object parameters define status of the objects at a time instance and the relationship of the objects with respect to the autonomous vehicle.

At step 530, safety critical components in an environmental model are identified. The safety critical components include data from the digital representation critical to the safety of the environment and the autonomous vehicle. For example, an obstruction that may cause injury to the objects in the autonomous vehicle or the environment. The safety critical components are identified by determining the safety critical data in the environmental model. For example, the object parameters may be used to determine the safety critical data.

At step 540, emergency control signals are generated to control operation of the autonomous vehicle based on the safety critical components. The emergency control signals are generated irrespective of the evolution of the environmental model. For example, the first digital representation of the environment and the autonomous vehicle is considered complete. Therefore, the safety critical components are decoupled from the process of updating the environmental model for higher accuracy.

At step 550, updates to the environmental model may be predicted based on historical sensor data. These updates are predicted based on prior environmental conditions using advanced neural networking algorithms for machine learning. At step 560 the environmental model is updated. The step of updation includes defining updates to the environmental model as transactions to be performed on the environmental model. The updates may be based on the sensor data and/or the predicted updates. The transactions include insertion, deletion, modification of the object parameters in the occupancy map.

The environmental model is updated by transactional processing of the transactions. In transactional processing the transactions are executed as atomic, recoverable operations. During execution the safety critical components and/or non-safety critical components of the environmental model are updated. As used herein the non-safety critical components include data from the environmental model not critical to the safety of the environment and autonomous vehicle.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A controller (200) for controlling at least one autonomous vehicle (280, 380), the controller (200) comprising:
a firmware (210) configured to control the autonomous vehicle (280, 380) comprising:
an event module (230) configured to process safety critical components in an environmental model of the autonomous vehicle (280, 380) to generate emergency control signals to control the behavior of the autonomous vehicle (280, 380) with priority,
wherein the environmental model is a digital representation of the autonomous vehicle and an environment (290) associated with the autonomous vehicle (280, 380), and
wherein the safety critical components include data from the digital representation that are critical to the safety of the environment (290) and the autonomous vehicle (280, 380); and
a transaction module (240) configured to update the environ-mental model by transactional processing of sensor data from sensing units of the autonomous vehicle (280, 380),
whereby at least one of the safety critical components (140) and non-safety critical components of the environmental model are updated,
wherein the non-safety critical components include data from the environmental model not critical to the safety of the environment (290) and autonomous vehicle (280, 380),
wherein the environmental model (290) further comprises:
an object list of objects in the autonomous vehicle (280, 380) and the environment, wherein the objects include at least one of living objects, non-living objects, animate objects and inanimate objects; and
an occupancy map of the objects and associated object parameters, wherein object parameters define status of the objects at a time instance and a relationship of the objects with respect to the autonomous vehicle (280, 380), and
wherein the transaction module (240) is configured to define the updates as transactions performed on the environmental model using at least one of the sensor data and predicted updates, wherein the transactions include insertion, deletion, modification of the object parameters in the occupancy map, and wherein the transactions are executed as atomic, recoverable operations.

2. The controller (200) according to claim 1, wherein the event module (230) is configured to process the safety critical components (140) irrespective of the update to the environmental model to generate the emergency control signals.

3. The controller (200) according to claim 1, wherein the e module (210) further comprises:
an environment module (290) configured to generate the environmental model from the sensor data generated by the sensing units; and
a prediction module (250) configured to predict updates to the environmental model based on historical sensor data.

4. A system (300) for controlling at least one autonomous vehicle (280, 380) comprising:
sensing units configured to generate sensor data indicating environment (290) of the autonomous vehicle (280, 380), wherein the sensor data indicates position, location of the autonomous vehicle (280, 380) and objects in the environment;
and
a controller (200) according to claim 1 communicatively coupled to the sensing units and configured to generate control signals that control operation of the autonomous vehicle.

5. The system (300) according to claim 4, further comprising:
a programmable network interface (350) configured to provide communication among at least one of the sensing units, the actuating units and the controller (200) using one or more of wired and wireless communication standards; and
actuating units configured to control operation of the autonomous vehicle (280, 380) based on the control signals.

6. The system (300) according to claim 5, wherein the sensing units comprises at least one of camera, Light Detection and Ranging (LiDAR), Radar, Global Positioning System (GPS) sensors, and wherein the actuating units includes one of speed controller, engine, propeller, landing gear and chassis controller (200).

7. A method of controlling at least one autonomous vehicle (280, 380), the method comprising:
identifying safety critical components in an environmental model of the autonomous vehicle (280, 380), wherein the environmental model is a digital representation of the autonomous vehicle (280, 380) and an environment (290) associated with the autonomous vehicle, and wherein the safety critical components (140) include data from the digital representation critical to the safety of the environment (290) and the autonomous vehicle (280, 380);
updating the environmental model by transactional processing of sensor data from sensing units in the autonomous vehicle (280, 380), whereby at least one of the safety critical components and non-safety critical components of the environmental model are updated, and wherein the non-safety critical components include data from the environmental model not critical to the safety of the environment (290) and autonomous vehicle (280, 380);
generating emergency control signals to control operation of the autonomous vehicle based on the safety critical components (140) irrespective of the update to the environmental model, and
executing the transactions as atomic, recoverable operations, wherein the transactions include insertion, deletion, modification of the object parameters in the occupancy map.

8. The method according to claim 7, further comprising: receiving sensor data from sensing units in the autonomous vehicle (280, 380);
generating the environmental model from the sensor data by applying sensor fusion techniques, wherein the environmental model further includes an object list of objects in the autonomous vehicle (280, 380) and the environment (290) an occupancy map, wherein the objects include at least one of living objects, non-living objects, animate objects and inanimate objects.

9. The method according to claim 8, wherein generating the environmental model further comprises:
generating the occupancy map including a map of the objects and associated object parameters, wherein object parameters define status of the objects at a time instance and a relationship of the objects with respect to the autonomous vehicle (280, 380).

10. The method according to one of claim 7 to claim9, further comprises:
predicting updates to the environmental model based on historical sensor data.

11. The method according to one of claim 7 to claim10, wherein updating the environmental model by transactional processing further comprises:
defining updates to the environmental model as transactions to be performed on the environmental model, wherein the updates are based on one of the sensor data and the predicted updates.

12. A computer readable medium having machine-readable instructions stored therein, which when executed by a processing unit (210), cause the processing unit to perform the steps of:
identifying safety critical components in an environmental model of the autonomous vehicle (280, 380), wherein the environmental model is a digital representation of the autonomous vehicle (280, 380) and an environment (290) associated with the autonomous vehicle, and wherein the safety critical components (140) include data from the digital representation critical to the safety of the environment (290) and the autonomous vehicle (280, 380) and wherein the environmental model (290) further comprises:
an object list of objects in the autonomous vehicle (280, 380) and the environment, wherein the objects include at least one of living objects, non-living objects, animate objects and inanimate objects; and
an occupancy map of the objects and associated object parameters, wherein object parameters define status of the objects at a time instance and a relationship of the objects with respect to the autonomous vehicle (280, 380);
generating emergency control signals to control operation of the autonomous vehicle (280, 380) based on the safety critical components, and
executing the transactions as atomic, recoverable operations, wherein the transactions include insertion, deletion, modification of the object parameters in the occupancy map;
updating the environmental model by transactional processing of sensor data from sensing units in the autonomous vehicle (280, 380), whereby at least one of the safety critical components and non-safety critical components of the environmental model are updated, and wherein the non-safety critical components include data from the environmental model not critical to the safety of the environment (290) and autonomous vehicle (280, 380).

## Patentansprüche

1. Steuerung (200) zum Steuern mindestens eines autonomen Fahrzeugs (280, 380), die Folgendes umfasst:
eine Firmware (210), die so konfiguriert ist, dass sie das autonome Fahrzeug (280, 380) steuert, und Folgendes umfasst:
ein Ereignismodul (230), das so konfiguriert ist, dass es sicherheitsrelevante Komponenten in einem Umgebungsmodell für das autonome Fahrzeug (280, 380) verarbeitet und so Notsteuersignale zum Steuern des Verhaltens des autonomen Fahrzeugs (280, 380) mit Priorität erzeugt,
wobei es sich bei dem Umgebungsmodell um eine digitale Darstellung des autonomen Fahrzeugs und einer mit dem autonomen Fahrzeug (280, 380) verknüpften Umgebung (290) handelt und
wobei die sicherheitsrelevanten Komponenten Daten aus der digitalen Darstellung umfassen, die für die Sicherheit der Umgebung (290) und des autonomen Fahrzeugs (280, 380) relevant sind, und
ein Transaktionsmodul (240), das so konfiguriert ist, dass es das Umgebungsmodell durch Transaktionsverarbeitung von Sensordaten aus Sensoreinheiten des autonomen Fahrzeugs (280, 380) aktualisiert, wodurch die sicherheitsrelevanten Komponenten (140) und/oder nicht sicherheitsrelevante Komponenten des Umgebungsmodells aktualisiert werden,
wobei die nicht sicherheitsrelevanten Komponenten Daten aus dem Umgebungsmodell enthalten, die für die Sicherheit der Umgebung (290) und des autonomen Fahrzeugs (280, 380) nicht relevant sind, wobei das Umgebungsmodell (290) ferner Folgendes umfasst:
eine Objektliste von Objekten in dem autonomen Fahrzeug (280, 380) und der Umgebung, wobei die Objekte lebende Objekte, nicht lebende Objekte, belebte Objekte und/oder unbelebte Objekte umfassen, und
eine Belegungskarte für die Objekte und zugehörige Objektparameter, wobei Objektparameter einen Status der Objekte zu einem Zeitpunkt und eine Beziehung der Objekte hinsichtlich des autonomen Fahrzeugs (280, 380) definieren und
wobei das Transaktionsmodul (240) so konfiguriert ist, dass es die Aktualisierungen als Transaktionen definiert, die unter Verwendung der Sensordaten und/oder prognostizierter Aktualisierungen an dem Umgebungsmodell durchgeführt werden,
wobei die Transaktionen ein Einfügen, ein Löschen, ein Ändern der Objektparameter in der Belegungskarte umfassen und als atomare Operationen ausgeführt werden, die sich rückgängig machen lassen.

2. Steuerung (200) nach Anspruch 1, wobei das Ereignismodul (230) so konfiguriert ist, dass es die sicherheitsrelevanten Komponenten (140) unabhängig von der Aktualisierung des Umgebungsmodells verarbeitet und so die Notsteuersignale erzeugt.

3. Steuerung (200) nach Anspruch 1, wobei das E-Modul (210) ferner Folgendes umfasst:
ein Umgebungsmodul (290), das so konfiguriert ist, dass es das Umgebungsmodell aus den von den Sensoreinheiten erzeugten Sensordaten erzeugt, und
ein Prognosemodul (250), das so konfiguriert ist, dass es auf der Grundlage von bereits vorhandenen Sensordaten Aktualisierungen des Umgebungsmodells prognostiziert.

4. System (300) zum Steuern mindestens eines autonomen Fahrzeugs (280, 380), das Folgendes umfasst:
Sensoreinheiten, die so konfiguriert sind, dass sie eine Umgebung (290) des autonomen Fahrzeugs (280, 380) angebende Sensordaten erzeugen, wobei die Sensordaten eine Position, einen Standort des autonomen Fahrzeugs (280, 380) und von Objekten in der Umgebung angeben, und
eine Steuerung (200) nach Anspruch 1, die für den Datenaustausch mit den Sensoreinheiten gekoppelt und so konfiguriert ist, dass sie Steuersignale erzeugt, mit denen ein Betrieb des autonomen Fahrzeugs gesteuert wird.

5. System (300) nach Anspruch 4, das ferner Folgendes umfasst:
eine programmierbare Netzwerkschnittstelle (350), die so konfiguriert ist, dass sie für einen Datenaustausch unter Verwendung eines oder mehrerer Standards für die drahtgebundene und/oder die drahtlose Kommunikation zwischen mindestens einer der Sensoreinheiten, den Betätigungseinheiten und der Steuerung (200) sorgt, und
Betätigungseinheiten, die so konfiguriert sind, dass sie auf der Grundlage der Steuersignale einen Betrieb des autonomen Fahrzeugs (280, 380) steuern.

6. System (300) nach Anspruch 5, wobei die Sensoreinheiten Kamera-, LiDAR- (Light Detection and Ranging), Radar- und/oder GPS-Sensoren (Global Positioning System) und die Betätigungseinheiten Drehzahlregler, Motor, Propeller, Fahrgestell- oder Fahrwerksregelung (200) umfassen.

7. Verfahren zum Steuern mindestens eines autonomen Fahrzeugs (280, 380), wobei das Verfahren Folgendes umfasst:
Identifizieren von sicherheitsrelevanten Komponenten in einem Umgebungsmodell für das autonome Fahrzeug (280, 380), wobei es sich bei dem Umgebungsmodell um eine digitale Darstellung des autonomen Fahrzeugs (280, 380) und einer mit dem autonomen Fahrzeug verknüpften Umgebung (290) handelt und die sicherheitsrelevanten Komponenten (140) Daten aus der digitalen Darstellung umfassen, die für die Sicherheit der Umgebung (290) und des autonomen Fahrzeugs (280, 380) relevant sind,
Aktualisieren des Umgebungsmodells durch Transaktionsverarbeitung von Sensordaten aus Sensoreinheiten in dem autonomen Fahrzeug (280, 380), wodurch die sicherheitsrelevanten Komponenten und/oder nicht sicherheitsrelevante Komponenten des Umgebungsmodells aktualisiert werden, und wobei zu den nicht sicherheitsrelevanten Komponenten Daten aus dem Umgebungsmodell gehören, die für die Sicherheit der Umgebung (290) und des autonomen Fahrzeugs (280, 380) nicht relevant sind,
Erzeugen von Notsteuersignalen zum von der Aktualisierung des Umgebungsmodells unabhängigen Steuern des Betriebs des autonomen Fahrzeugs auf der Grundlage der sicherheitsrelevanten Komponenten (140) und Ausführen der Transaktionen als atomare Operationen, die sich rückgängig machen lassen, wobei die Transaktionen ein Einfügen, ein Löschen, ein Ändern der Objektparameter in der Belegungskarte umfassen.

8. Verfahren nach Anspruch 7, das ferner Folgendes umfasst:
Empfangen von Sensordaten aus Sensoreinheiten in dem autonomen Fahrzeug (280, 380),
Erzeugen des Umgebungsmodells aus den Sensordaten durch Anwenden von Sensorfusionstechniken, wobei das Umgebungsmodell ferner eine Objektliste von Objekten in dem autonomen Fahrzeug (280, 380) und der Umgebung (290) und eine Belegungskarte umfasst, wobei die Objekte lebende Objekte, nicht lebende Objekte, belebte Objekte und/oder unbelebte Objekte umfassen.

9. Verfahren nach Anspruch 8, wobei das Erzeugen des Umgebungsmodells ferner Folgendes umfasst:
Erzeugen der Belegungskarte einschließlich einer Karte mit den Objekten und zugehörigen Objektparametern, wobei Objektparameter den Status der Objekte zu einem Zeitpunkt und
eine Beziehung der Objekte hinsichtlich des autonomen Fahrzeugs (280, 380) definieren.

10. Verfahren nach einem der Ansprüche 7 bis 9, das ferner Folgendes umfasst:
Prognostizieren von Aktualisierungen des Umgebungsmodells auf der Grundlage von bereits vorhandenen Sensordaten.

11. Verfahren nach einem der Ansprüche 7 bis 10, wobei das Aktualisieren des Umgebungsmodells durch Transaktionsverarbeitung ferner Folgendes umfasst:
Definieren von Aktualisierungen des Umgebungsmodells als an dem Umgebungsmodell durchzuführende Transaktionen, wobei die Aktualisierungen auf den Sensordaten oder den prognostizierten Aktualisierungen basieren.

12. Computerlesbares Medium, auf dem maschinenlesbare Anweisungen gespeichert sind, die, wenn sie von einer Prozessoreinheit (210) ausgeführt werden, diese dazu veranlassen, folgende Schritte durchzuführen:
Identifizieren von sicherheitsrelevanten Komponenten in einem Umgebungsmodell für das autonome Fahrzeug (280, 380), wobei es sich bei dem Umgebungsmodell um eine digitale Darstellung des autonomen Fahrzeugs (280, 380) und einer mit dem autonomen Fahrzeug verknüpften Umgebung (290) handelt und die sicherheitsrelevanten Komponenten (140) Daten aus der digitalen Darstellung umfassen, die für die Sicherheit der Umgebung (290) und des autonomen Fahrzeugs (280, 380) relevant sind, und das Umgebungsmodell (290) ferner Folgendes umfasst:
eine Objektliste von Objekten in dem autonomen Fahrzeug (280, 380) und der Umgebung, wobei die Objekte lebende Objekte, nicht lebende Objekte, belebte Objekte und/oder unbelebte Objekte umfassen, und
eine Belegungskarte mit den Objekten und zugehörigen Objektparametern, wobei Objektparameter den Status der Objekte zu einem Zeitpunkt und eine Beziehung der Objekte hinsichtlich des autonomen Fahrzeugs (280, 380) definieren,
Erzeugen von Notsteuersignalen zum Steuern des Betriebs des autonomen Fahrzeugs (280, 380) auf der Grundlage der sicherheitsrelevanten Komponenten, und
Ausführen der Transaktionen als atomare Operationen, die sich rückgängig machen lassen, wobei die Transaktionen ein Einfügen, ein Löschen, ein Ändern der Objektparameter in der Belegungskarte umfassen,
Aktualisieren des Umgebungsmodells durch Transaktionsverarbeitung von Sensordaten aus Sensoreinheiten in dem autonomen Fahrzeug (280, 290), wodurch die sicherheitsrelevanten Komponenten und/oder nicht sicherheitsrelevante Komponenten des Umgebungsmodells aktualisiert werden, und wobei zu den nicht sicherheitsrelevanten Komponenten Daten aus dem Umgebungsmodell gehören, die für die Sicherheit der Umgebung (290) und des autonomen Fahrzeugs (280, 380) nicht relevant sind.

## Revendications

1. Dispositif de commande (200) destiné à la commande d'au moins un véhicule autonome (280, 380), le dispositif de commande (200) comprenant : un micrologiciel (210) configuré de façon à commander le véhicule autonome (280, 380) comprenant :
un module d'événement (230) configuré de façon à traiter des composantes critiques en matière de sécurité dans un modèle environnemental du véhicule autonome (280, 380) de façon à générer des signaux de commande d'urgence destinés à commander le comportement du véhicule autonome (280, 380) en priorité,
dans lequel le modèle environnemental est une représentation numérique du véhicule autonome et d'un environnement (290) associé au véhicule autonome (280, 380), et
dans lequel les composantes critiques en matière de sécurité comprennent des données provenant de la représentation numérique qui sont critiques pour la sécurité de l'environnement (290) et du véhicule autonome (280, 380), et
un module de transaction (240) configuré de façon à actualiser le modèle environnemental par un traitement transactionnel de données de capteur provenant d'unités de détection du véhicule autonome (280, 380),
grâce à quoi au moins une des composantes critiques en matière de sécurité (140) et des composantes non critiques en matière de sécurité du modèle environnemental est actualisée,
dans lequel les composantes non critiques en matière de sécurité comprennent des données provenant du modèle environnemental non critiques pour la sécurité de l'environnement (290) et du véhicule autonome (280, 380),
dans lequel le modèle environnemental (290) comprend en outre :
une liste d'objets dans le véhicule autonome (280, 380) et l'environnement, les objets comprenant au moins des objets parmi des objets vivants, des objets non vivants, des objets animés et des objets inanimés, et
une carte d'occupation des objets et des paramètres d'objet associés, les paramètres d'objet définissant un statut des objets à une instance temporelle et une relation des objets par rapport au véhicule autonome (280, 380), et
dans lequel le module de transaction (240) est configuré de façon à définir les actualisations sous la forme de transactions exécutées sur le modèle environnemental au moyen d'au moins un élément parmi les données de capteur et les actualisations prédites, les transactions comprenant l'insertion, la suppression, la modification des paramètres d'objet dans la carte d'occupation, et les transactions étant exécutées sous la forme d'opérations atomiques récupérables.

2. Dispositif de commande (200) selon la revendication 1, dans lequel le module d'événement (230) est configuré de façon à traiter les composantes critiques en matière de sécurité (140) indépendamment de l'actualisation apportée au modèle environnemental de façon à générer les signaux de commande d'urgence.

3. Dispositif de commande (200) selon la revendication 1, dans lequel le module d'événement (210) comprend en outre :
un module d'environnement (290) configuré de façon à générer le modèle environnemental à partir des données de capteur générées par les unités de détection, et
un module de prédiction (250) configuré de façon à prédire des actualisations apportées au modèle environnemental en fonction de données de capteur historiques.

4. Système (300) de commande d'au moins un véhicule autonome (280, 380) comprenant :
des unités de détection configurées de façon à générer des données de capteur indiquant un environnement (290) du véhicule autonome (280, 380), les données de capteur indiquant la position, l'emplacement du véhicule autonome (280, 380) et des objets dans l'environnement, et
un dispositif de commande (200) selon la revendication 1 couplé en communication aux unités de détection et configuré de façon à générer des signaux de commande qui commandent le fonctionnement du véhicule autonome.

5. Système (300) selon la revendication 4, comprenant en outre :
une interface réseau programmable (350) configurée de façon à fournir une communication entre au moins des dispositifs parmi les unités de détection, les unités d'actionnement et le dispositif de commande (200) au moyen d'une ou de plusieurs normes de communication parmi des normes de communication filaires et sans fil, et
des unités d'actionnement configurées de façon à commander le fonctionnement du véhicule autonome (280, 380) en fonction des signaux de commande.

6. Système (300) selon la revendication 5, dans lequel les unités de détection comprennent au moins un élément parmi un appareil de prise de vues, un radar de télémétrie par laser (LiDAR), des capteurs de système de géopositionnement par satellite (GPS), et dans lequel l'unité d'actionnement comprend un dispositif parmi un dispositif de commande de vitesse, un moteur, une hélice, un train d'atterrissage et un dispositif de commande de châssis (200).

7. Procédé de commande d'au moins un véhicule autonome (280, 380), le procédé comprenant :
l'identification de composantes critiques en matière de sécurité dans un modèle environnemental du véhicule autonome (280, 380),
dans lequel le modèle environnemental est une représentation numérique du véhicule autonome (280, 380) et d'un environnement (290) associé au véhicule autonome, et dans lequel les composantes critiques en matière de sécurité (140) comprennent des données provenant de la représentation numérique critiques pour la sécurité de l'environnement (290) et du véhicule autonome (280, 380),
l'actualisation du modèle environnemental par un traitement transactionnel de données de capteur provenant d'unités de détection dans le véhicule autonome (280, 380), grâce à quoi au moins une des composantes critiques en matière de sécurité et des composantes non critiques en matière de sécurité du modèle environnemental est actualisée, et dans lequel les composantes non critiques en matière de sécurité comprennent des données provenant du modèle environnemental non critiques pour la sécurité de l'environnement (290) et du véhicule autonome (280, 380),
la génération de signaux de commande d'urgence destinés à commander le fonctionnement du véhicule autonome en fonction des composantes critiques en matière de sécurité (140) indépendamment de l'actualisation apportée au modèle environnemental, et
l'exécution des transactions sous la forme d'opérations atomiques, récupérables, les transactions comprenant l'insertion, la suppression, la modification des paramètres d'objet dans la carte d'occupation.

8. Procédé selon la revendication 7, comprenant en outre : la réception de données de capteur à partir d'unités de détection dans le véhicule autonome (280, 380),
la génération du modèle environnemental à partir des données de capteur par l'application de techniques de fusion de capteur, le modèle environnemental comprenant en outre une liste d'objets dans le véhicule autonome (280, 380) et l'environnement (290) une carte d'occupation, les objets comprenant au moins des objets parmi des objets vivants, des objets non vivants, des objets animés et des objets inanimés.

9. Procédé selon la revendication 8, dans lequel la génération du modèle environnemental comprend en outre :
la génération de la carte d'occupation comprenant une carte des objets et des paramètres d'objet associés, les paramètres d'objet définissant un statut des objets à une instance temporelle et une relation des objets par rapport au véhicule autonome (280, 380).

10. Procédé selon l'une quelconque des revendications 7 à 9, comprenant en outre :
la prédiction d'actualisations apportées au modèle environnemental en fonction de données de capteur historiques.

11. Procédé selon l'une quelconque des revendications 7 à 10, dans lequel l'actualisation du modèle environnemental par un traitement transactionnel comprend en outre :
la définition d'actualisations apportées au modèle environnemental sous la forme de transactions à exécuter sur le modèle environnemental, les actualisations étant basées sur un élément parmi les données de capteur et les actualisations prédites.

12. Support lisible par ordinateur possédant des instructions lisibles par ordinateur conservées en mémoire sur celui-ci qui, lorsqu'elles sont exécutées par une unité de traitement (210), amènent l'unité de traitement à exécuter les étapes suivantes :
l'identification de composantes critiques en matière de sécurité dans un modèle environnemental du véhicule autonome (280, 380), le modèle environnemental étant une représentation numérique du véhicule autonome (280, 380) et d'un environnement (290) associé au véhicule autonome, et les composantes critiques en matière de sécurité (140) comprenant des données provenant de la représentation numérique critiques pour la sécurité de l'environnement (290) et du véhicule autonome (280, 380), et le modèle environnemental (290) comprenant en outre :
une liste d'objets dans le véhicule autonome (280, 380) et l'environnement, les objets comprenant au moins des objets parmi des objets vivants, des objets non vivants, des objets animés et des objets inanimés, et
une carte d'occupation des objets et des paramètres d'objet associés, les paramètres d'objet définissant un statut des objets à une instance temporelle et une relation des objets par rapport au véhicule autonome (280, 380),
la génération de signaux de commande d'urgence destinés à commander le fonctionnement du véhicule autonome (280, 380) en fonction des composantes critiques en matière de sécurité, et
l'exécution des transactions sous la forme d'opérations atomiques, récupérables, les transactions comprenant l'insertion, la suppression, la modification des paramètres d'objet dans la carte d'occupation,
l'actualisation du modèle environnemental par un traitement transactionnel de données de capteur provenant d'unités de détection dans le véhicule autonome (280, 380), grâce à quoi au moins une des composantes critiques en matière de sécurité et des composantes non critiques en matière de sécurité du modèle environnemental est actualisée, et les composantes non critiques en matière de sécurité comprenant des données provenant du modèle environnemental non critiques pour la sécurité de l'environnement (290) et du véhicule autonome (280, 380).
